# EUROPEAN PATENT APPLICATION

(11) **EP 1 669 867 A1**
(43) Date of publication of application: **14.06.2006**
(21) Application number: 04292878.8
(22) Date of filing: 06.12.2004
(51) Int. Cl.: G06F 9/54, H04M 3/42, H04M 3/493, G06Q 10/00

(54) **System for personal information management applications**

(71) Applicant: ALCATEL, 75008 Paris (FR)
(72) Inventor: Gass, Raymond, 67150 Bolsenheim (FR)
(74) Representative: Rausch, Gabriele

(57) **Abstract**

The present invention relates to a system comprising a processor, a memory unit and a display screen, wherein said memory contains instructions that when executed implement a method of importing selected information into a first application, comprising the step of capturing within a displayed screen of a second application a first format of information that includes a plurality of selectable information value types, whereby at least two out of the plurality of information value types have a different value type attribute, whereby each value type attribute is correlated with a local position of the system. The invention relates further to a process for establishing a connection between a portable computer system comprising a processor, a memory unit and a display screen and a plurality of subgroups consisting of interconnected computer systems comprising the steps, wherein said memory contains instructions that when executed implement a method of importing selected information into a first application

## Description

The present invention relates to the field of importing and exporting directory information to and from personal information management computer applications.

The efficient exchange of personal information found in various electronic media into and out of personal information management (hereinafter referred to as "PIM") applications in computer systems including cellular (mobile) phones, personal digital assistants ("PDA") and portable "laptops" has been a challenge. Personal information including directory information, such as phone numbers, e-mail addresses etc can be found in text form in various electronic media.

The functionality of the exchange by using a computer system or other type of electronic system or device is furthermore dramatically enhanced by coupling stand alone devices (including mobile phones) together to form a networking environment. Within such a networking environment, users may readily exchange files, share information stored on a common database etc. and communicate and establish connections via electronic mail (e-mail), voice over internet, voice over phone, via video teleconferencing etc..

Automatic transfer of directory and calendar information is found in various electronic media such as e-mail, SMS. A widely used format is the so-called vcard format which is structured according to the vCard MIME Directory profile type.

Personal Data Interchange (PDI) occurs every time two or more individuals communicate, in either a business or personal context, face-to-face, or across space and time. Such interchanges frequently include the exchange of informal information, such as business cards, telephone numbers, addresses, dates and times of appointments, etc. Augmenting PDI with electronics and telecommunications can help ensure that information is quickly and reliably communicated, stored, organized and easily located when needed.

Personal information, by nature, is complex and diverse. Currently, proprietary standards exist to structure some types of PDI information, but no single, open specification comprehensively addresses the needs of collecting and communicating PDI information across many common communication channels such as telephones, voice-mail, e-mail, and face-to-face meetings.

The hitherto established vCard MIME Directory Profile Type contains directory information, typically pertaining to a single directory entry. The information is described using an attribute schema that is tailored for capturing personal contact information. The vCard can include attributes that describe identification, delivery addressing, telecommunications addressing, geographical, organizational, general explanatory and security and access information about the particular object associated with the vCard.

These types are used in the vCard profile to capture information associated with the identification and naming of the person or resource associated with the vCard.

The Type name "TEL" specifies the telephone number for telephony communication with the object the vCard represents usually with a Type encoding of 8bit. The Type value is a single phone-number value which is according to the IETF standard specified in a canonical form in order to specify an unambiguous representation of the globally unique telephone endpoint. This type is based on the X.500 Telephone Number attribute. Further specifications in canonical form include but are not restricted to the type parameter "TYPE" to specify intended use for the telephone number. The TYPE parameter values can further include parameters like "home" to indicate a telephone number associated with a residence, "msg" to indicate the telephone number has voice messaging support, "work" to indicate a telephone number associated with a place of work, "pref" to indicate a preferred-use telephone number, "voice" to indicate a voice telephone number, "fax" to indicate a facsimile telephone number, "cell" to indicate a cellular telephone number, "video" to indicate a video conferencing telephone number, "pager" to indicate a paging device telephone number, "bbs" to indicate bulletin board system telephone number, "modem" to indicate a MODEM connected telephone number, "car" to indicate a car-phone telephone number, "isdn" to indicate an ISDN service telephone number, "pcs" to indicate a personal communication services telephone number etc. The default type is usually "voice". These type parameter values can be specified as a parameter list (i.e., "TYPE=work;TYPE=voice") or as a value list (i.e., "TYPE=work,voice"). The default can be overridden to another set of values by specifying one or more alternate values. A type example may be
TEL;TYPE=work,voice,pref,msg:+33-123-444-1234 A vCard contains further types concerned with information associated with geographical positions or regions associated with the object the vCard represents.

However, the current canonical representation of telephone numbers causes unnecessary costly problems, when for example a mobile phone tries to establish a connection with a person having given its telephone number via vCard. Depending on the location of the mobile phone, or portable computer etc, the system will always dial the canonically represented number even when the target person may be reached within a local area network, like a company network, a private network etc without dialling the entire canonically represented number.

Therefore, the problem underlying the present invention is to impart to a mobile computer system a possibility to establish a connection to different access points/telephone numbers depending on the location of the mobile computer system.

This problem is solved by a mobile system comprising a processor, a memory unit and a display screen, wherein said memory contains instructions that when executed implement a method of importing selected information into a first application, comprising the step of capturing within a displayed screen of a second application a first format of information that includes a plurality of selectable information value types, whereby at least two out of the plurality of information value types have a different value type attribute, whereby each value type attribute is correlated with a local position of the system.

The mobile system thus enables after localisation of the local position to select the correct value type number correlated to its local position for establishing a connection with the person associated with the value type. The localisation can be done for example by a central server, to which the mobile computer system establishes a connection preferably prior to selecting the value type number correlated with its current position.

In a preferred embodiment, the first format of information is substantially compliant with the vCard format, which is universally applicable and enables transmission of the relevant data via different formats like e-mail, SMS etc. Therefore in another preferred embodiment, the second application is an electronic mail message or also preferred an Internet web page.

Preferably the first application is selected from an electronic address book, an electronic calendar, an electronic phone number diary.

In an especially preferred embodiment, the system comprises further a second system comprising a processor, a memory unit and a display screen which is in at least temporarily connection with the first system.

It is especially preferred that the system, comprises the step of automatically determining the local position of the second system by the first system and automatically selecting the value type attribute which corresponds to the determined position of the second system. This enables the system to unequivocally determine the exact position and to assign the correct value type number related to the local position. It is therefore further preferred that the system further comprises the step of temporarily storing said value type attribute in said memory, which is in an especially preferred embodiment, for example in the case of a GSM mobile phone etc a telephone number.

Therefore it is preferred that at least one telephone number is expressed as a canonical representation of the phone number and at least one further telephone number is expressed as a non-canonical representation.

Preferred fields of application require that the second system is a portable computer system, a palm sized computer system, a blackberry computer system, a cellular phone which shall connect to persons located in a plurality of interconnected computer systems, which consist of different sub-groups (for examples LANs etc) of computer systems.

Since small portable computer systems have a restricted computing ability it is preferred that a central system will provide a plurality of value type attributes which represent for example telephone numbers for each number on the vCard.

The invention relates further to a process for establishing a connection between a portable computer system comprising a processor, a memory unit and a display screen and a plurality of subgroups consisting of interconnected computer systems comprising the steps, wherein said memory contains instructions that when executed implement a method of importing selected information into a first application, comprising the step of capturing within a displayed screen of a second application a first format of information that includes a plurality of selectable information value types, whereby at least two out of the plurality of information value types have a different value type attribute, whereby each value type attribute is correlated with a local position of the system.

As explained in the foregoing it is preferred that the value type attribute is a telephone number.

In the process according the invention it is preferred that it comprises the step of automatically determining the local position of the portable computer system and further the step of transmitting the local position to the portable system before establishing a connection to one of a plurality of subgroups.

### Definitions and Abbreviations

### vCard:

A standard defining the format of an electronic business card. All devices supporting vCard can exchange information such as phone numbers and addresses. For instance a user with a vCard-aware phonebook application on a handheld computer can easily transfer names and phone numbers to a vCard-aware mobile phone.
The format is suitable as an interchange format between applications or systems. The format is defined independent of the particular method used to transport it. The transport for this exchange might be a file system, point-to-point asynchronous communication, wired-network transport, or some form of unwired transport.
A vCard is a data stream consisting of one or more vCard objects. The individual vCard definitions can be identified and parsed within the datastream. The vCard data stream may exist as a persistent form in a file system, document management system, network connection between two network endpoints, or in any other digital transport that has an abstraction of a stream of bytes.
Conceptually, a *vCard Writer* creates vCard data streams and a *vCard Reader* interprets vCard data streams. The vCard Reader and Writer may be implemented as a single application or as separate applications. It is not the intent of this specification to define the implementation of these processes beyond some fundamental capabilities related to the format of the vCard data stream and a common set of conformance requirements.
This specification provides for a clear-text encoding that is intended to be based on the syntax used by the MIME specification (RFC 1521).
The encoding of this specification can be used in environments which are constrained to 7-bit transfer encodings, short line lengths, and low bandwidth. In addition, the encoding is simple in order to facilitate the implementation of reader and writer applications on small platforms, such as Personal Digital Assistants (PDA), cellular telephones, or alphanumeric pagers.
The vcard is intended to be used for exchanging information about people and resources. In today's business environment, this information is typically exchanged on business cards. It is appropriate, then that this specification define this information in terms of a paradigm based on an electronic business card object.
The ultimate destination for this information is often a collection of business cards or electronic contact manager.
The basis for the data types supported by this specification have their origin in openly defined, international standards and in additional capabilities based on enhancements suggested by the demonstration of the exchange of prototypical vCards using the Internet based World-Wide-Web, Infra-red data transport, and simultaneous voice and data (SVD) modems.
The "person" object defined by the CCITT X.500 Series Recommendation for Directory Services was the primary reference for the properties that are defined by this specification. The X.520/X.521 attributes and objects are mapped into and out of an instance of a vCard. The vCard specification has extended the capabilities that have been defined within the CCITT X.500 Series Recommendation to allow the exchange of additional information often recorded on business cards and electronic contact managers.
The specification of all date and time values are defined in terms of the ISO 8601 standard for representation of dates and times.
The paradigm of an electronic business card is related to the concepts of an entry in a LAN/WAN directory or an electronic mail address book or distribution list. The vCard specification is needed to address the requirements for an interchange format for the "person" personal data type or object.
Personal data applications such as Personal Information Managers (PIM) often provide an import/export capability using Comma Separated Value (CSV) or Tab Delimited Files (TDF) formats. However, these solutions do not preserve the intent of the originating application. When a CSV and TDF format is used by a PIM, the meta-data or semantics of the originating object are only apparent to a similar version of the originating application. Exchange of data between such applications is another important application of an industry-standard specification for an electronic business card interchange format, such as the vCard specification.
***FPI*:** Formal Public Identifier. A string expression that represents a public identifier for an object. FPI syntax is defined by ISO 9070.

### GUID: Globally Unique IDentifier

***Internet:*** A WAN connecting thousands of disparate networks in industry, education, government, and research. The Internet uses TCP/IP as the standard for transmitting information.

***MIME:*** Multipurpose Internet Mail Extensions, as defined in RFC1521.

### PDA: Personal Digital Assistant computing device

***PDI:*** Personal Data Interchange, a collaborative application area which involves the communication of data between people who have a business or personal relationship, but do not necessarily share a common computing infrastructure.

### PIM: Personal Information Manager

***RFC#### documents:*** Internet "Request For Comment" documents (i.e., RFC822, RFC1521, etc.).

***URL:*** Uniform Resource Locator; a string expression that can represent any resource on the Internet or local system. RFC 1738 defines the syntax for an URL.

**UTC**: Universal Time Coordinated; also known as UCT, for Universal Coordinated Time.

**WAN**: Wide-Area Network

The invention is described for illustrative purposes only without restricting the scope of the invention by way of examples and the figure in more detail

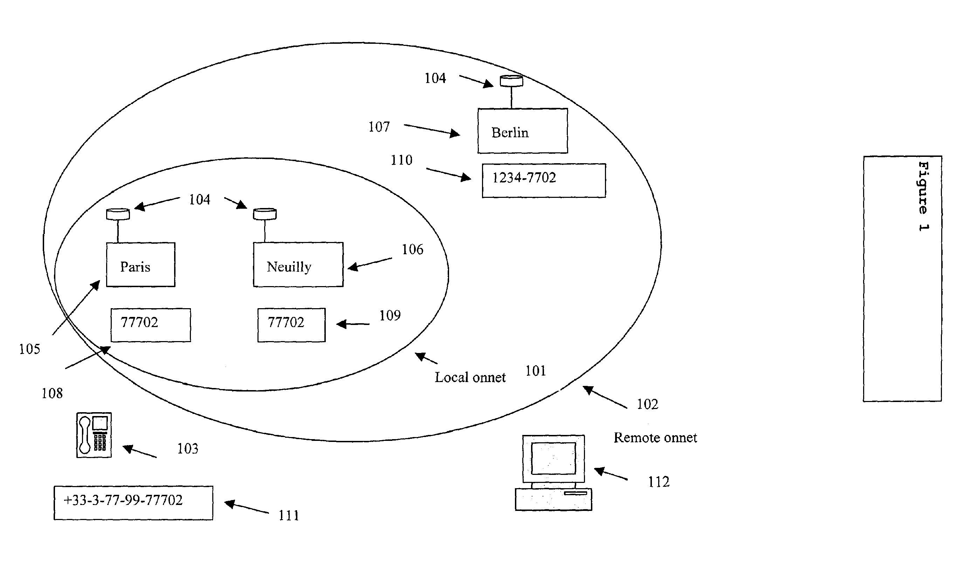

Figure 1 shows a schematic representation a mobile phone having stored vCard information upon establishing a connection to a person depending on the local position of the mobile phone.

As explained before, a vCard is a collection of one or more properties. A property is a uniquely named value. A set of properties can be grouped within a vCard. For example, the properties for a telephone number and comment can be grouped in order to preserve the coupling of the annotation with the telephone number. In addition to property groupings, a vCard can include other, nested vCard objects. This allows for the recording of information about a secondary person or object associated with a given person or object. Additionally, this allows for the specification of a distribution list or work group of multiple vCard objects.

A vCard data stream may include one or more vCard objects. An individual vCard object is identified within a data stream by the appearance of the Begin vCard Delimiter:
BEGIN:VCARD
The sentinel string must appear as the first characters in the data stream or the first characters on a line.
The vCard object is terminated with either the logical end of the data stream or the appearance of the End vCard Delimiter as the first character on a line:
END:VCARD

A *property* is the definition of an individual attribute describing the vCard. A property takes the following form:
PropertyName [`;` PropertyParameters] ' : ' Property-Value
as shown in the following example:
TEL;HOME:+33-3-77-99-77702
A property takes the form of one or more lines of text.
The specification of property names and property parameters is case insensitive. The property name can be one of a set of pre-defined strings. The property name, along with an optional grouping label, must appear as the first characters on a line. In the previous example, "TEL" is the name of the Telephone Number property.
Property values are specified as strings. In the previous example, "+33-3-77-99-77702" is the formatted value for the Telephone Number property represented in canonical form.
A property value can be further qualified with a property parameter expression. Property parameter expressions are delimited from the property name with a Semi-colon character (ASCII 59). A Semi-colon in a property parameter value must be escaped with a Backslash character (ASCII 92). The property parameter expressions are specified as either a name=value or a value string. The value string can be specified alone in those cases where the value is unambiguous.
A valid short version of the same property parameter specification might be:
NOTE;QUOTED-PRINTABLE:Don't remember to order a first class menu from Michel Guérard //Full property parameter expression
There are two forms of grouping or collections supported within the vCard. A collection of vCard objects can be grouped and a collection of properties within an individual vCard can be grouped. This is also the case within the scope of the present invention, since the telephone numbers, represented in different forms (canonical and non-canonical) are also grouped within one collection of value type numbers or parameters, thus defining the "property grouping" of telephone numbers.

A *Property Grouping* is the definition of a method for specifying a collection of related properties within a vCard object. There is no requirement on a vCard reader that it preserve the property group name. However, the vCard reader is required to preserve the grouping of the properties.
The Property Grouping is identified by a character string prefix to the property name; separated by the Period character (ASCII decimal 46).
The grouping of a comment property with a telephone property is shown in the following example:
A.TEL;HOME:+33-3-77-99-77702
A.NOTE:This is my vacation home.
The vCard Reader conforming to this specification must be able to parse and process the property grouping. The support for Property Grouping is optional for a vCard Writer conforming to this specification.
il) may also provide an encoding property at the transport wrapper level. This property can be used in these cases for transporting a vCard data stream that has been defined using a default encoding other than 7-bit (e.g., 8-bit).

The usual telephone number property specifies the canonical number string for a telephone number for telephony communication with the vCard object. The value of this property is specified in a canonical form in order to specify an unambiguous representation of the globally unique telephony endpoint. This property is based on the X.520 Telephone Number attribute.
The canonical form cannot be dialed without first being transformed by a dialing algorithm. The dialing algorithm combines the canonical number string with knowledge of the local dialing procedures, in effect at the time of call placement to produce actual dialing instructions. The actual dialing algorithm is outside the scope of this specification.

Software which creates this property can store a string in these allowed formats. Dialing software should be prepared to parse numbers from either of the supported formats; as neither format is considered to be technically costly to support.
This property is identified by the property name **TEL**. An example of this property follows:
TEL;PREF;WORK;MSG;FAX:+1-800-555-1234
Support for this property is optional for vCard Writers conforming to this specification.

The Telephone Type property parameter specifies the subtype of telephone that is associated with the telephone number (e.g., Home, Work, Cellular, Facsimile, Video, Modem, Message Service, or Preferred). One or more subtype values can be specified for a given telephone number.

As an example to better illustrate the present invention without unduly limiting its scope, a person will therefore have the 3 following business telephone numbers which are indicated on its vCard:
+33 3 90 67 77 02
7 77 02
1234 7702

The first one is the canonical representation used in prior art as explained in the foregoing, which is used in conjunction with the international dialing plan; this is the one that is offered in particular with GSM phones. The second one is a representation in non-canonical form and has to be dialed when the system according to the invention is logged on for example a "private home database" network. The third one also represented in non-canonical form is to be used by the system when for example logged on a "private visitor database" network. The vCard according to the invention thus offers different fields for indicating telephone numbers for persons to be contacted which are represented in canonical and non-canonical form which allow a user desiring to establish a connection with the person to be contacted to optimally selecting the suitable number to be dialed depending on its geographical location at each moment.

Translating from canonical to local numbering will be accomplished on a central basis, for example by a central server to which the mobile systems connects before establishing a connection with the person to be contacted. Therefore the calculation of the right information depending on the localization of the mobile computer system is done on a central computer system which transmits the different results to the terminal or mobile phone, laptop etc, depending on the rules for the description of where to use a number rather than another one, i.e. when to use a non-canonically

All vCards according to the invention can also have graphics and multimedia including photographs, company logos, audio clips such as for name pronunciation Geographic and time zone information in vCards let others know when to contact the user.

The vCard spec is transport and operating system independent so vCard-ready software can be installed on any computer or mobile phone. vCards according to the invention are Internet friendly, standards based, and have wide industry support.

VCards according to the invention can be used over infra-red links between hand-held organizers, PDAs (Personal Digital Assistants), and notebook PC's from any manufacturer. Within seconds, the participants have the information automatically stored in their favorite directory. Later it can be used to place a phone call, send a fax or Email, or even to initiate a video conference. There is no need to manually enter business card information.

When using a notebook PC with a DSVD (Digital Simultaneous Voice and Data) modem to browse product highlights on a company's homepage.

For a call center, this can very significantly cut down the call time by eliminating the time (and errors) it takes to exchange this information verbally with an operator at a computer xeyboara. This provides a great proauctivity and cost savings in the call center environment.

Voice response units can provide an option to *"press 2 to leave your vCard".* Software telephony applications can implement a *Send vCard button.* This would also provide enhanced functionality for a mobile phone.

Other applications include office products, pager applications and smart card technology.

Figure 1 illustrates in a schematic representation how to use a system according to the invention. A user of a system 103, preferably a mobile system which is able to establish connections by different ways, for example by different telecommunication standards as the GSM standard etc. has stored in its vCard or vCalendar. The mobile system my be any mobile system able to establish a connection by a telephone net, like a portable computer (laptop), a mobile phone, a PDA, a Blackberry computer etc. and is not restricted thereto.

The 3 following business numbers are indicated on its vCard for a person to be called by the mobile computer system 103:
+33 3 90 67 77 02
7 77 02
1234 7702

The first one is the canonical representation, represented in figure 1 as 111 used in prior art, which is used in conjunction with the international dialing plan; this is the one that is offered in particular with GSM phones. When trying to reach the person from anywhere outside.
The second one has to be dialed when the system according to invention is logged on for example a "private home database" network. This is represented by 101, the local onnet (LAN), for example connecting a site in Paris 105 with a site in Neuilly 106, each site with local onnet phone numbers 108 and 109..

The third one 1234 7702 is to be used by the system when for example logged on a "private visitor database" network, for example a remote onnet 102 (WLAN) connecting different sites in a multinational company, for example, one a site is located in Berlin 107, 110, others in Paris 105 and Neuilly 106. Each site has its own access point 104. The system 103 receives from a central unit 112, which may be placed within local onnet 101, remote onnet 102 or even outside of one of these WLAN/LAN nets. Central system 112 determines the geographical position of system 103, when the latter establishes a connection with central system 112 before starting to dial a phone number for a person. Central system 112 compares the local position of system 103 with the respective phone numbers on the vCard for the person to be dialed and determines the nearest access point. The vCard content may be stored on the mobile system 103, or at the same also on the central system 112. After having assigned the correct access point, system 103 will dial only the phone number corresponding to the nearest access point of its position. Thus enabling a faster and more direct access to the person to be contacted.

## Claims

1. A system comprising a processor, a memory unit and a display screen, wherein said memory contains instructions that when executed implement a method of importing selected information into a first application, comprising the step of:
capturing within a displayed screen of a second application a first format of information that includes a plurality of selectable information value types, whereby at least two out of the plurality of information value types have a different value type attribute, whereby each value type attribute is correlated with a local position of the system.

2. System according to claim 1, whereby the first format of information is substantially compliant with the vCard format.

3. System according to claim 2, wherein the second application is an electronic mail message.

4. System according to claim 2, wherein the second application is an Internet web page.

5. System according to one of the preceding claims, wherein the first application is selected from an electronic address book, an electronic calendar, an electronic phone number diary.

6. System according to one of the preceding claims further comprising a second system comprising a processor, a memory unit and a display screen which is in at least temporarily connection with the first system.

7. System according to claim 6, comprising the step of automatically determining the local position of the second system by the first system.

8. System according to claim 7 further comprising the step of automatically selecting the value type attribute which corresponds to the determined position of the second system.

9. System according to claim 8, further comprising the step of temporarily storing said value type attribute in said memory.

10. System according to one of the preceding claims wherein the value type attribute is a telephone number.

11. System according to claim 10, wherein at least one telephone number is expressed as a canonical representation of the phone number and at least one further telephone number is expressed as a non-canonical representation.

12. System according to claim 11 further comprising the step of transmitting the telephone number to the second system.

13. System according to claim 12, wherein the second system is a portable computer system, a palm sized computer system, a cellular phone.

14. System according to one of the preceding claims further comprising a plurality of interconnected computer systems.

15. System according to claim 14, wherein the plurality of interconnected computer systems consist of different sub-groups of computer systems.

16. Process for establishing a connection between a portable computer system comprising a processor, a memory unit and a display screen and a plurality of subgroups consisting of interconnected computer systems comprising the steps, wherein said memory contains instructions that when executed implement a method of importing selected information into a first application, comprising the step of:
capturing within a displayed screen of a second application a first format of information that includes a plurality of selectable information value types, whereby at least two out of the plurality of information value types have a different value type attribute, whereby each value type attribute is correlated with a local position of the system.

17. Process according to claim 16, wherein the value type attribute is a telephone number.

18. Process according to claim 17, comprising the step of automatically determining the local position of the portable computer system.

19. Process according to claim 18, further comprising the step of transmitting the local position to the portable system before establishing a connection to one of a plurality of subgroups.

20. Process according to claim 19, further comprising the step of automatically selecting the phone number associated to the local position.
